# EUROPEAN PATENT APPLICATION

(11) **EP 4 806 624 A1**
(43) Date of publication of application: **16.09.2026**
(21) Application number: 25162622.2
(22) Date of filing: 10.03.2025
(51) Int. Cl.: B29D 99/00, B08B 15/00, B29C 70/48, B29C 70/54, B29C 70/44, B29L 31/08

(54) **FACILITY AND GAS EXHAUST SYSTEM**

(71) Applicant: Nordex Energy SE & Co. KG, 22419 Hamburg (DE)
(72) Inventor: Haspel, Benedikt, 22419 Hamburg (DE); Ehrich, Kai, 22419 Hamburg (DE)
(74) Representative: Völkl Siebenson Patentanwälte - Partnerschaft mbB

(57) **Abstract**

The invention relates to a facility (200) for manufacturing a wind turbine rotor blade (110), comprising:
a plurality of stationary molds (202) for manufacturing parts of a wind turbine rotor blade (110),
a gas exhaust system (203) comprising a plurality of gas exhaust terminals (204), each gas exhaust terminal (204) being arranged stationary with respect to the molds (202), and
a vacuum pump (208) producing exhaust gas during operation, wherein
the vacuum pump (208) is movable relative to the molds (202) and the plurality of gas exhaust terminals (204) such that the vacuum pump (208) can be selectively connected to a gas exhaust terminal (204) of the plurality of the gas exhaust terminals (204) to discharge the exhaust gas of the vacuum pump (208) to the outside (210) of the facility (200).

The invention also relates to a gas exhaust system (203).

## Description

The present disclosure relates to a facility for manufacturing a wind turbine rotor blade and a gas exhaust system

Wind turbines with wind turbine rotor blades are widely known from the state of the art and are used to convert wind energy into electrical energy. Wind turbine rotor blades are usually manufactured in a shell design and comprise several components made of fiber reinforced laminate, like the aerodynamic shell. Typically, in a first step, half shells from many layers of a fiber composite material are produced, into which support structures such as spar caps and shear webs are integrated. A resin infusion process takes place and the half shells cure in their respective half-shell molds. In a second step, the manufactured half-shells are placed on top of each other and bonded together for producing a wind turbine rotor blade. The half-shells and thus the finally produced wind turbine rotor blade may be segmented for manufacturing a so-called split or segmented wind turbine rotor blade. Alternatively, the rotor blades can be manufactured with an integral manufacturing technology.

In the resin infusion process, respective resin systems are used to transport and infuse the required resin to a mold. These systems typically store the multicomponent resins in individual storage tanks in which the resin components, e.g. precursor material, are preconditioned for subsequent further processing. One or more vacuum pumps are provided for controlling vacuum levels for such preconditioning and/or to ensure proper resin flow and infusion into the mold. While it is possible to stabilize these settings during transport or idle phases of the used resin or precursor material, during active infusion the system often necessitates continuous adjustment of pressure levels, typically requiring vacuum pumps to remain operational.

It is an object of the present disclosure to provide a technical concept for the manufacturing of wind turbine rotor blades in which a particularly high level of occupational safety is achieved for workers.

This object is solved by a solution according to the independent claim. Advantageous embodiments are given in the sub-claims.

According to a first aspect, a facility for manufacturing a wind turbine rotor blade is disclosed. The facility comprises a plurality of stationary molds for manufacturing parts of a wind turbine rotor blade. A part of a wind turbine rotor blade in this context can be a whole rotor blade as well in the case of an integral manufacturing. The facility comprises a gas exhaust system. The gas exhaust system comprises a plurality of gas exhaust terminals. Each gas exhaust terminal is arranged stationary with respect to the molds. Further, the facility comprises a vacuum pump producing exhaust gas during operation. The vacuum pump is movable relative to the molds and the plurality of gas exhaust terminals such that the vacuum pump can be selectively connected to a gas exhaust terminal of the plurality of the gas exhaust terminals to discharge the exhaust gas of the vacuum pump to the outside of the facility.

As mentioned above, vacuum is needed for the resin infusion process. The vacuum is provided by the vacuum pump, typically in a range of 2 to 50 mbar. When creating and maintain the vacuum, a vacuum exhaust air (herein also named exhaust gas) is generated, which may contain hazardous particles or substances, typically arising from the resin or precursor material. In the described facility, the vacuum pump is connected to a gas exhaust terminal so that the vacuum exhaust air is transported directly out of the facility. The exhaust air is not released into the facility and therefore cannot be inhaled by a worker. Thus, the invention makes a major contribution to minimizing the particles and any other hazardous substances to which workers or employees are exposed during manufacture of a wind turbine rotor blade.

The manufacturing process for wind turbine rotor blades benefits significantly from the use of the movable vacuum pump in conjunction with the multiple gas exhaust terminals. The flexibility to position the vacuum pump based on the specific mold being used allows for an optimized setup, reducing downtime during the switching between different component production steps. Preferably, depending on the layout of the facility, the gas exhaust terminals are suitably, e.g. strategically, distributed within the facility. This enables that the vacuum pump can be connected to the nearest gas exhaust terminal with minimal hose or pipe length. Thus, no very long hoses or pipes (up to more than 100m) need to be laid in the facility to transfer the exhaust air out of the facility. Thus, the hoses/pipes can be routed in such a way that the driveways and other work areas in the facility are not disturbed by the exhaust air transport. Furthermore, this not only reduces the material needed for piping but also enhances the efficiency of the vacuum system, ensuring more consistent pressure levels and contributing to the overall quality and precision of the components being produced. The exhaust gas terminals are integrated into the facility and its layout. For example, the terminals can be installed integrally with the walls and/or floor of the facility.

Furthermore, contributing to a flexible and easy installation, the gas exhaust system and in particular the gas exhaust terminals can also be retrofitted in a facility. For example, the gas exhaust terminals can be installed into walls and/or floors after the facility has been erected.

The described facility ensures a controlled and efficient exhaust gas removal, improving workplace safety, maintaining process consistency, and supporting compliance with environmental regulations.

The described facility means a factory including at least one hall for manufacturing wind turbine rotor blades. In the facility several stationary molds are placed. With the molds, parts (also named components) for a wind turbine rotor blade or a wind turbine rotor blades itself can be manufactured. As an example, a mold for producing an upper half shell, a mold for producing a lower half shell of a wind turbine rotor blade and/or a mold for manufacturing a spar cap are arranged stationary in the facility.

The vacuum pump is configured for providing the vacuum for the resin infusion process, either for the resin transfer into the mold or for preconditioning the resin prior to the infusion, e.g. for refueling and/or degassing of precursor material. The vacuum pump produces the above-described exhaust gas during operation. It is possible that several moveable vacuum pumps are provided. Preferably, each of the vacuum pumps is connected on a short distance to a gas exhaust terminal. It is also possible that two or more vacuum pumps form a vacuum unit which is connectable to a gas exhaust terminal.

Connecting a vacuum pump to a gas exhaust terminal means a fluidical connection, a hose, pipe, duct or any other kind of conduit is used to ensure a fluid-tight connection.

In the context of this writing, a vacuum pump is an individual machine, which can be moved to its intended location in the facility. Alternatively, the vacuum pump is part of a movable resin system, e.g. a resin mixing machine, which has further components besides the vacuum pump. For example, such resin system can be configured to store materials, e.g. in one or more tanks, and/or to prepare the resin to be infused. For example, such resin system stores several precursor materials, which are mixed by a mixing component to provide the final resin which is to be infused into a mold. Such resin system may comprise one or more vacuum pumps for preconditioning the precursor materials and/or for transferring resin into the mold.

Moveable means that the vacuum pump can be moved relatively with respect to the stationary molds. For this purpose, the vacuum pump comprises suitable means like two or more wheels. As another example, the vacuum pump comprises sliding means or wheels for being movable on a rail system.

It is clear for the person skilled in the art, that the vacuum pump may be suitably supported, e.g. on a trolley or the movable resin system, to fulfil its function and to be moved as described. Hereinafter, all features described with respect to the vacuum pump may analogously apply to the movable resin system comprising at least one vacuum pump.

A gas exhaust terminal has a connection interface for connecting a vacuum pump in a fluid tight manner, e.g. via a pipe. An outlet of the vacuum pump or the vacuum pump unit is connected to the connection interface of a gas exhaust terminal. The connection of a pipe to the gas exhaust terminal can be done by known standard means, e.g. via fittings, a snap-fit connection, screwing, a bayonet lock or the like. In other words, each gas exhaust terminal has a defined interface to ensure an easy connection with a vacuum pump once the vacuum pump has been positioned at the intended place in the facility. It is noted that each gas exhaust terminal can also be connected to a stationery vacuum pump.

The term releasably refers to a firm, tight connection that can be undone again without causing any damage, for example by unscrewing the connection, releasing the snap-fit connection or a bayonet lock.

According to an embodiment, at least one gas exhaust terminal is assigned to each of the molds. In other words, each stationary mold is spatially assigned to a gas exhaust terminal, i.e. a gas exhaust terminal is arranged as close and conveniently as possible to the respective mold. Thus, the movable vacuum pump can be connected to a gas exhaust terminal via a very short pipe runs, regardless of the mold they are used for.

According to an embodiment, a gas exhaust terminal is arranged between two molds such, that it is in the shortest distance to each of the two molds. In other words, the gas exhaust terminal is arranged equidistantly or centrally between the two molds. This ensures that the distance to each mold is as short as possible. This contributes to the above-mentioned functions and advantages. By positioning the gas exhaust terminal between the two molds as described, the required hose/pipe lengths are minimized for each of the mold, thereby reducing pressure losses. Thus, a single gas exhaust terminal can be efficiently used for both molds. This improves the overall efficiency of the production process as, for example, the vacuum pump not necessarily needs to be connected to another gas exhaust terminal, if the vacuum pump is used with the other mold.

According to an embodiment, the vacuum pump is connected to a gas exhaust terminal located closest to the vacuum pump. This contributes to the above-mentioned functions and advantages.

According to an embodiment, the gas exhaust system comprises a conduit system for discharging exhaust gas. Conduit system refers to a network of interconnected pipes, ducts, or hoses designed to transport exhaust gas from the various gas exhaust terminals within the facility to designated exhaust outlets, in particular one facility exhaust outlet. For example, the gas exhaust system serves the purpose of efficiently collecting and removing exhaust gases generated by one or more vacuum pumps. It comprises a conduit system which may consist of one or more of the following:
- Main and branch conduits that connect multiple gas exhaust terminals to a central exhaust point.
- Flexible or rigid piping to accommodate different installation needs and optimize airflow.
- Valves or control mechanisms to regulate gas flow and direct it as needed.
- Connection points for integrating a vacuum pump or other gas-handling equipment.

The advantage of the conduit system is that it enables the efficient and controlled removal of exhaust gases out of the facility. By providing a structured network for gas discharge, it minimizes pressure losses, ensures a consistent vacuum supply, and enhances the overall effectiveness of the gas exhaust system. Additionally, it improves workplace safety by reducing the accumulation of harmful gases and contributes to regulatory compliance by facilitating proper emissions management. Furthermore, the conduit system allows for flexible integration with multiple exhaust terminals, optimizing the use of a single vacuum pump across different molds and production areas.

According to an embodiment, the conduit system comprises a collector pipe, to which the at least some of the gas exhaust terminals are connected, wherein via the collector pipe the exhaust gas is directed to the outside of the facility. Again, connection means a fluidical connection. By consolidating multiple gas exhaust terminals into a single conduit, the system ensures efficient and streamlined gas removal, reducing the complexity and length of individual exhaust lines.

According to an embodiment, the conduit system comprises a fan to blow the exhaust gas to the outside of the facility. This means, that the exhaust gas is actively directed towards the outside of the facility. By integrating a fan, either in the collector pipe or a branch pipe, the efficiency of the gas exhaust system is significantly improved, as it ensures a controlled and continuous removal of exhaust gases, even in situations where natural airflow or vacuum pressure alone may be insufficient. This actively driven exhaust process helps maintain a stable and clean working environment by preventing the accumulation of gases inside the facility. Additionally, the use of a fan can optimize the performance of the vacuum system by reducing backpressure within the conduit system, thereby enhancing overall process reliability and energy efficiency.

According to an embodiment, the conduit system comprises one or more filters for filtering out hazardous particles. By integrating filtration into the gas exhaust system, harmful airborne contaminants generated during the vacuum process, such as fine dust, resin particles, or other pollutants, can be effectively captured. This not only helps to maintain a cleaner and safer working environment but also reduces the risk of environmental pollution. Additionally, filtering out hazardous particles can contribute to compliance with regulatory emissions standards and extend the lifespan of downstream components, such as fans or ductwork, by preventing particle buildup.

According to an embodiment, the conduit system runs within a floor and/or a wall of the facility. This provides a space-efficient and streamlined solution for exhaust gas removal during the vacuum process. By embedding the conduit system into the facility's structure, obstructions in the working area are minimized, improving accessibility and safety for personnel. Additionally, this design protects the conduit system from external damage, reducing maintenance requirements and ensuring long-term operational reliability. Furthermore, integrating the conduits within the floor or walls can lead to improved thermal and acoustic insulation, which helps maintain stable process conditions and reduces noise emissions from the exhaust system.

According to an embodiment, at least one of the gas exhaust terminals is arranged in a floor of the facility. This contributes to the above functions and advantages, wherein particularly by arranging a terminal in the floor, conduit lengths can be kept short. Additionally, or alternatively, at least one gas exhaust terminal is arranged in a wall, in particular for directly discharging the exhaust gas to the outside of the facility. Thus, the exhaust gas can directly be transferred from the terminal to the outside of the facility.

In the context of this writing, wall means an outer wall of the facility, which has at least one side (outer side), which is facing the outer environment. In other words, wall does not mean an inner wall within the facility, e.g. for separating two rooms from one another. This definition also includes a ceiling wall.

According to an embodiment, at least one of the gas exhaust terminals comprises a backflow valve or is assigned to a backflow valve. The integration of a backflow valve prevents the unintended return of exhaust gases into the facility or the vacuum system, thereby ensuring a controlled and unidirectional airflow. Additionally, the use of a backflow valve helps to optimize the efficiency of the exhaust system by preventing pressure fluctuations and enhance workplace safety.

According to an embodiment, at least one of the gas exhaust terminals comprises a fan or is assigned to a fan to blow the exhaust gas to the outside of the facility. We refer to the above-mentioned functions and advantages with respect to the fan of the conduit system, which similarly applies.

According to an embodiment, at least one of the gas exhaust terminals comprises a filter or is assigned to a filter for filtering out hazardous particles. We refer to the above-mentioned functions and advantages with respect to the filter of the conduit system, which similarly applies.

According to an embodiment, each gas exhaust terminal has a shutter so that when no vacuum pump is attached, the gas exhaust terminal is airtightly sealable. This prevents unwanted airflow or leakage, ensuring that the gas exhaust system maintains optimal performance during the resin infusion process. By sealing unused exhaust terminals, pressure stability of the gas exhaust system is improved. Additionally, the airtight sealing helps prevent contamination from external air, humidity, or dust entering the gas exhaust system or the conduit system respectively, which can enhance process reliability and reduce maintenance efforts. Furthermore, this feature contributes to workplace safety by preventing the unintended release of process gases into the facility.

According to an embodiment, the vacuum pump of the resin machine is connected to a gas exhaust terminal via a pipe or a hose, wherein the pipe or the hose has a maximum length of 10 m, preferably 7,5 m, more preferably 5 m. This contributes to the above functions and advantages.

According to an embodiment, a hose for connecting the vacuum pump to an gas exhaust terminal comprises a manual valve.

This makes it possible to flush the hose and/or the extraction system before opening the connection at the respective gas exhaust terminal, in case the gas exhaust terminal is connected to the hose via a controllable valve.

According to an embodiment, wherein at least one of the molds comprises a further vacuum pump, the further vacuum pump being stationary with respect to the mold and produces exhaust gas during operation, and wherein the further vacuum pump can be selectively connected to a gas exhaust terminal of the plurality of the gas exhaust terminals to discharge the exhaust gas of the further vacuum pump to the outside of the facility. By integrating a stationary vacuum pump directly with a mold, the efficiency of the vacuum-assisted resin infusion process is improved, as the vacuum is applied precisely where needed. Additionally, the ability to selectively connect the vacuum pump to different gas exhaust terminals ensures flexibility in the exhaust management system, reducing the need for long conduit connections and minimizing pressure losses.

According to an embodiment, wherein the mold comprises a gas exhaust terminal being stationary with respect to the mold, and wherein a vacuum pump can be selectively connected to the gas exhaust terminal of the mold to discharge the exhaust gas of the vacuum pump to the outside of the facility. Thus, a vacuum pump can be directly connected to a gas exhaust terminal at the mold and short conduit connections can be established.

According to an embodiment, the facility comprises one or more work areas, in which the movable vacuum pump, in particular a movable resin system comprising the vacuum pump, can be positioned, wherein each work area has a gas exhaust terminal being stationary with respect to the mold, and wherein the vacuum pump of the resin machine can be selectively connected to a gas exhaust terminal of the work areas to discharge the exhaust gas of the vacuum pump to the outside of the facility. A work area can be, for example, a material refill station, a degassing area or the like. Generally, a work area is a region in the facility for a certain purpose, where a vacuum pump is necessary. In these areas a direct connection to a gas exhaust terminal can be made, wherein no long hoses/pipes are needed which may obstruct other areas of the facility.

According to a second aspect, a gas exhaust system for a facility for manufacturing a wind turbine rotor blade is disclosed. The gas exhaust system comprises a plurality of gas exhaust terminals being configured to be installed stationary in a wall and/or a floor of the facility. The gas exhaust terminals can be selectively connected to a vacuum pump in order to discharge exhaust gas of the vacuum pump.

The above description and embodiments with respect to the first aspect analogously apply to the gas exhaust system and vice versa.

Further advantages, features and functions, which are explained in connection with the figures, are given in the following exemplary embodiments of the invention. Identical, similar or similarly acting elements are provided with the same reference signs in the figures.

In the figures:
- FIG. 1: shows a schematic view of a wind turbine.
- FIG. 2: shows a schematic top view of a facility, and
- FIG. 3: shows a schematic side view of a facility.

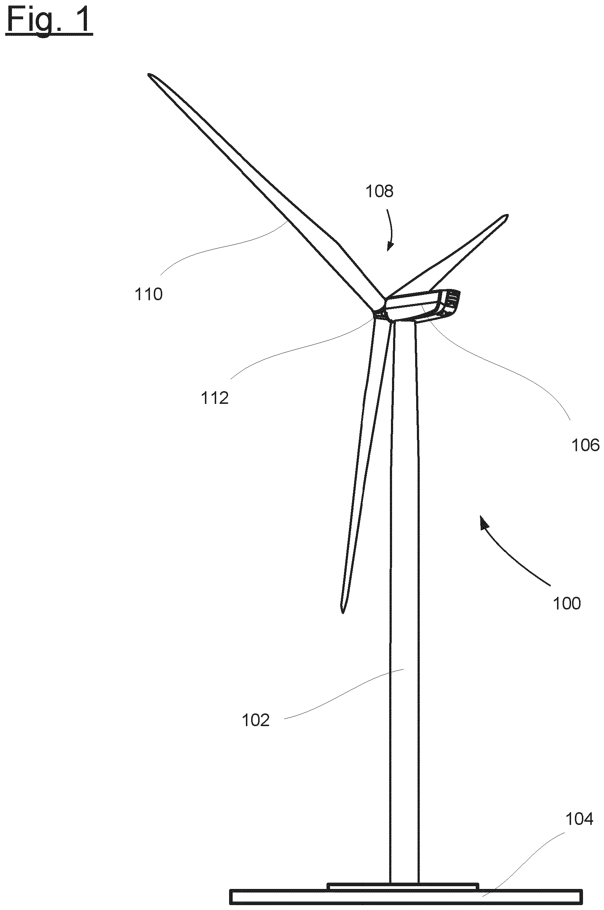

FIG. 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

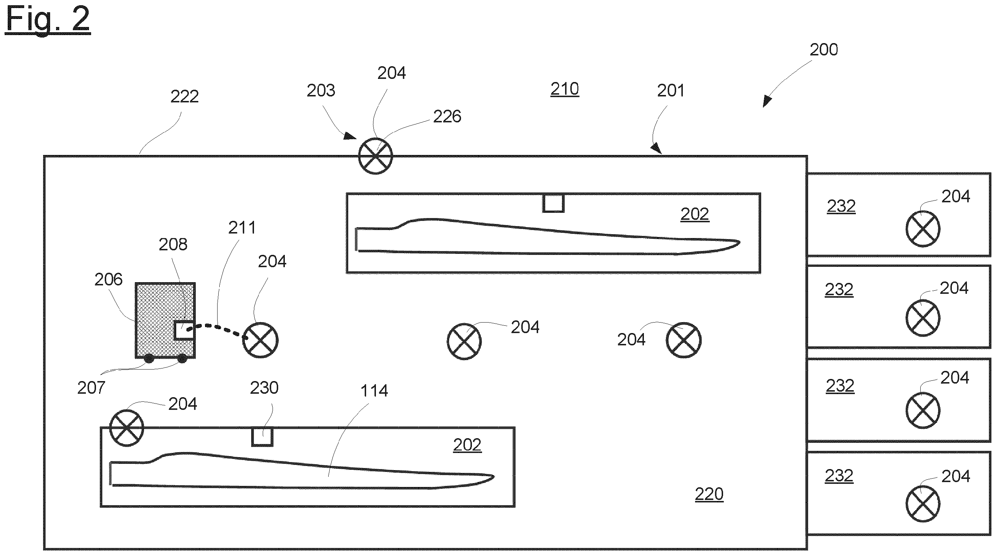

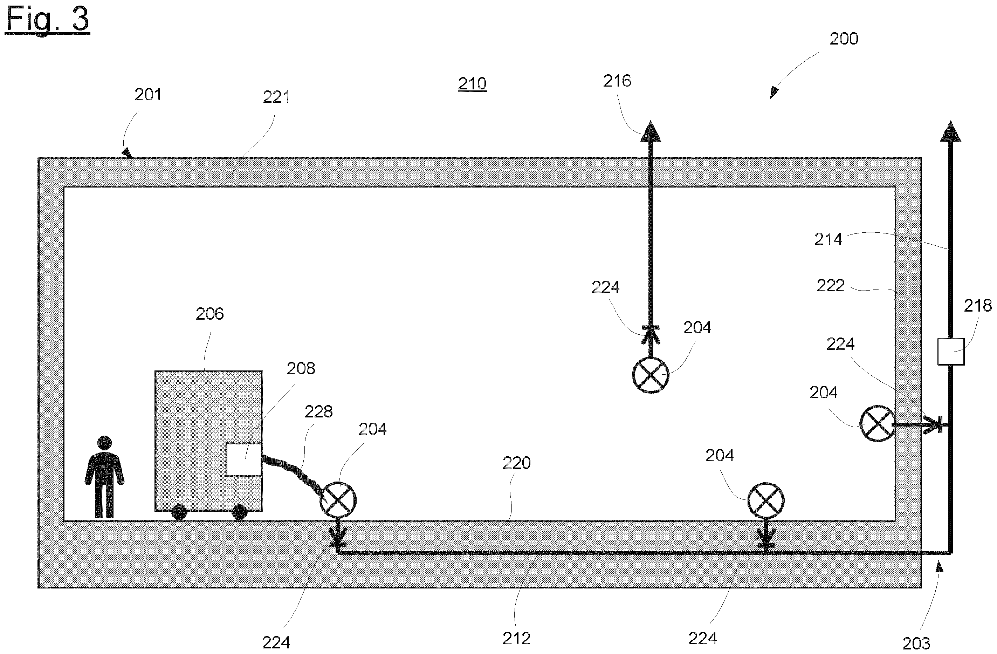

FIG. 2 and 3 show a schematic top view and a side of a facility 200. The facility 200 comprises a factory hall 201, in which several stationary molds 202 (here: two molds) are arranged. The molds 202 are configured for producing parts of a wind turbine rotor blade 110. In the present example, the one stationary mold 202 is configured for manufacturing a half shell of a wind turbine rotor blade 110. The factory hall 201 comprises a floor 220 and outer walls 222.

The facility 200 comprises a resin mixing machine 206 which corresponds to a movable resin system as described before. The resin mixing machine 206 in the present example is a trolley with several wheels 207 and is configured to transport and infuse resin. The resin mixing machine 206 is a mobile machine that can be moved to any location within the factory hall 201 in order that resin can be infused to and into the respective mold 202. The resin mixing machine 206 comprises at least one vacuum pump 208, which therefore moves when the resin mixing machine 206 is moved.

The resin mixing machine 206 can comprise various components, e.g. tanks for storing material like precursor material and resin, a mixing unit for mixing material, and others. It is noted here that the resin mixing machine 206 can be designed differently. Essentially, a movable vacuum pump 208 is present, either as an individual movable component or as an integral part of a machine like the described resin mixing machine 206.

The facility 200 further comprises a gas exhaust system 203 for discharging exhaust gas, in particular exhaust gas arising from the vacuum pump 208, out of the facility 200, i.e. to the outside 210 of the facility 200. For that purpose, the gas exhaust system 203 comprises several gas exhaust terminals 204, which are arranged stationary with respect to the molds 202 in the facility 200.

In order to discharge the exhaust gas, the vacuum pump 208 of the resin mixing machine 206 can be selectively and fluidically coupled to any one of the gas exhaust terminals 204, depending on the location of the vacuum pump 208 itself. As already described, the nearest gas exhaust terminal 204 is used preferably so that the connecting line is particularly short. For the connection to a gas exhaust terminal 204 one or more ducts 211, e.g. a pipe or hose, are used. For connecting a duct 211, each gas exhaust terminal 204 comprises known connection means. Likewise, the vacuum pump 208 comprises a suitable connection interface that allows a duct 211 to be coupled.

Additionally, more than one vacuum pump 208 can be used to perform the transfer of the resin from more than one mixing machine to the mold. Each vacuum pump can be connected to one of the gas exhaust terminals.

During operation of the vacuum pump 208, exhaust gas of the vacuum pump 208 can thus be transferred to the outside 210 via a respective connected gas exhaust terminal 204.

In the present example, a gas exhaust terminal 204 is specifically assigned to a mold 202. As shown in FIG. 2, the vacuum pump 208 is connected in the shortest distance to a gas exhaust terminal 204, which, in this example, is an integral part of the mold 202 for a half shell 114 itself.

With regard to FIG. 3, which illustrates a schematic side view of facility 200, the gas exhaust system 203 comprises a conduit system 212, which has a collector pipe 214, to which some gas exhaust terminals 204 are fluidically connected. The collector pipe 214 runs at least partially in the floor 220 of the factory hall 201. Via the collector pipe 214, exhaust gas from one or more gas exhaust terminals 204 can be collected and transferred to the outside 210.

The conduit system 212 comprises one or more filters 218 as already described before. Here, a filter 218 is arranged in the collector pipe 214, outside of the factory hall 201. Further, the conduit system 212 comprises a fan 216 as described above, which is arranged in the collector pipe 214, e.g. at an outer end region thereof.

In the present embodiment, each gas exhaust terminal 204 comprises a shutter 226, as described above. Optionally, one or more gas exhaust terminals 204 themselves can have a fan and/or a filter as mentioned above. With regard to FIG. 3, a gas exhaust terminal 204 is connected to a ceiling 223, wherein a fan 216 is assigned to the gas exhaust terminal 204. of the factory hall 201 Furthermore, the gas exhaust terminals 204 each have a backflow valve 224 as described above.

With respect to FIG. 3 (molds 202 are not shown for sake of clarity), it is shown that the vacuum pump 208 of the resin mixing machine 206 is connected via a hose 228 to a gas exhaust terminal 204 in the floor, the hose 228 being as short as possible or very short (e.g. as defined above).

As can be seen from FIG. 2, the facility 200 comprises several work areas 232. In the shown example there four work areas 232, for example a fill-up area, a degassing area, a storage and a maintenance area. Each work area 232 has its own gas exhaust terminal 204. The resin mixing machine 206 can now be moved to each of the work areas 232 and be connected to the respective gas exhaust terminal 204. Thus, during a respective operation of the vacuum pump 208, the discharge of exhaust gas of the vacuum pump 208 can be efficiently done in accordance with the mentioned functions and advantages.

As can be seen from FIG. 2, a further vacuum pump 230 is stationary arranged with respect to the mold 202 for the half shell. This further vacuum pump 208 produces exhaust gas during operation and can, similar to the movable vacuum pump 208, selectively connected to a gas exhaust terminal 204 of the plurality of the gas exhaust terminals 204 to discharge the exhaust gas to the outside 210 of the facility 200. Again, a very short connecting line to the gas exhaust terminal 204 is preferred.

It is noted that the described facility is only an example and may have a different layout. There may be more stationary molds 202 and more or less of the following elements: gas exhaust terminals, filters, fans, backflow valves and the like. Also, the gas exhaust system 203 may comprise more or less collector pipes and ducts 211, for example. Essentially, the movable vacuum pipe 208 (or more of them) can be connected selectively to a gas exhaust terminal 204 to transfer any exhaust gas to the outside 210, wherein the mentioned functions and advantages are achieved, at least in part.

### List of reference signs

- 100: wind turbine
- 102: tower
- 104: foundation
- 106: nacelle
- 108: rotor
- 110: wind turbine rotor blade
- 112: rotor hub
- 114: half shell

- 200: facility
- 201: factory hall
- 202: mold
- 203: gas exhaust system
- 204: gas exhaust terminal
- 206: resin mixing machine
- 207: wheel
- 208: vacuum pump
- 210: outside
- 211: duct
- 212: conduit system
- 214: collector pipe
- 216: fan
- 218: filter
- 220: floor
- 222: wall
- 221: ceiling
- 224: backflow valve
- 226: shutter
- 228: hose
- 230: further vacuum pump
- 232: work area

## Claims

1. Facility (200) for manufacturing a wind turbine rotor blade (110), comprising:
a plurality of stationary molds (202) for manufacturing parts of a wind turbine rotor blade (110),
a gas exhaust system (203) comprising a plurality of gas exhaust terminals (204), each gas exhaust terminal (204) being arranged stationary with respect to the molds (202), and
a vacuum pump (208) producing exhaust gas during operation, wherein
the vacuum pump (208) is movable relative to the molds (202) and the plurality of gas exhaust terminals (204) such that the vacuum pump (208) can be selectively connected to a gas exhaust terminal (204) of the plurality of the gas exhaust terminals (204) to discharge the exhaust gas of the vacuum pump (208) to the outside (210) of the facility (200).

2. Facility (200) according to claim 1, wherein at least one gas exhaust terminal (204) is assigned to each of the molds (202).

3. Facility (200) according to claim 1, wherein a gas exhaust terminal (204) is arranged between two molds such, that it is in the shortest distance to each of the two molds (202).

4. Facility (200) according to any one of the preceding claims, wherein the vacuum pump (208) is connected to a gas exhaust terminal (204) located closest to the vacuum pump (208).

5. Facility (200) according to anyone of the preceding claims, wherein the gas exhaust system (203) comprises a conduit system (212) for discharging exhaust gas.

6. Facility (200) according to claim 5, wherein the conduit system (212) comprises a collector pipe (214), to which the at least some of the gas exhaust terminals (204) are connected, wherein via the collector pipe (214) the exhaust gas is directed to the outside (210) of the facility (200).

7. Facility (200) according to claim 5 or 6, wherein the conduit system (212) comprises a fan (216) to blow the exhaust gas to the outside (210) of the facility (200).

8. Facility (200) according to any one of claims 5 to 7, wherein the conduit system (212) comprises one or more filters (218) for filtering out hazardous particles.

9. Facility according to any one of claims 5 to 8, wherein the conduit system (212) runs within a floor (220) and/or a wall (222) of the facility (200).

10. Facility (200) according to any one of the preceding claims, wherein at least one of the gas exhaust terminals (204) is arranged in a floor (220) of the facility (200).

11. Facility (200) according to any one of the preceding claims, wherein at least one of the gas exhaust terminals (204) comprises a backflow valve (224) or is assigned to a backflow valve (224).

12. Facility (200) according to any one of the preceding claims, wherein at least one of the gas exhaust terminals (204) comprises a fan (216) or is assigned to a fan (216) to blow the exhaust gas to the outside (210) of the facility (200).

13. Facility (200) according to any one of the preceding claims, wherein at least one of the gas exhaust terminals (204) comprises a filter (218) or is assigned to a filter (218) for filtering out hazardous particles.

14. Facility (200) according to any one of the preceding claims, wherein each gas exhaust terminal (204) has a shutter (226) so that when no vacuum pump is attached, the gas exhaust terminal (204) is airtightly sealable.

15. Facility (200) according to any one of the preceding claims, wherein at least one of the molds (202) comprises a further vacuum pump (230), the further vacuum pump (230) being stationary with respect to the mold (202) and produces exhaust gas during operation, and wherein the further vacuum pump (230) can be selectively connected to a gas exhaust terminal (204) of the plurality of the gas exhaust terminals (204) to discharge the exhaust gas of the further vacuum pump (230) to the outside (210) of the facility (200).

16. Facility (200) according to any one of the preceding claims, wherein the mold (202) comprises a gas exhaust terminal (204) being stationary with respect to the mold (202), and wherein a vacuum pump can be selectively connected to the gas exhaust terminal (204) of the mold (202) to discharge the exhaust gas of the vacuum pump to the outside of the facility.

17. Gas exhaust system (203) for a facility (200) for manufacturing a wind turbine rotor blade (110), comprising
a plurality of gas exhaust terminals (204) being configured to be installed stationary in a wall (222) or a floor (200) of the facility (200),
the gas exhaust terminals (204) can be selectively connected to a vacuum pump (208) in order to discharge exhaust gas of the vacuum pump (208).
